# EUROPEAN PATENT APPLICATION

(11) **EP 3 955 649 A1**
(43) Date of publication of application: **16.02.2022**
(21) Application number: 20926368.0
(22) Date of filing: 17.07.2020
(51) Int. Cl.: H04W 48/10, H04W 76/15

(54) **MULTI-LINK TERMINAL AND METHOD AND APPARATUS THEREOF FOR EXECUTING LINK SWITCHING, AND STORAGE MEDIUM**

(30) Priority: 29.06.2020 CN 202010603951
(71) Applicant: Chengdu Xgimi Technology Co., Ltd, Chengdu, Sichuan 610041 (CN)
(72) Inventor: WU, Hao, Chengdu, Sichuan 610041 (CN); XIE, Fang, Chengdu, Sichuan 610041 (CN); LIAO, Yang, Chengdu, Sichuan 610041 (CN)
(74) Representative: Barker Brettell LLP
(86) International application number: PCT/CN2020/102744
(87) International publication number: WO 2022/000579

(57) **Abstract**

Disclosed are a multi-link terminal, a method and device for performing link switching by a multi-link terminal, and a storage medium. The method includes that: a link switching request message is sent to a network access device on a primary link, the link switching request message containing original link information and target link information; a link switching response message sent by the network access device is received on the primary link, the link switching response message containing mapping information of Traffic Identifier (TID) and link updated by the network access device; if the link switching is supported in the link switching response message, the local mapping information of TID and link is updated according to the association of TID and link in the link switching response message, the connection with the original link is disconnected, and a connection is established with the network access device on the target link. In the embodiments of the present disclosure, a terminal requests actively link switching, which realizes the switching between the original link and the target link, effectively guarantees the overall performance of network, and improves the quality of user service.

## Description

### Technical Field

The embodiments of the present disclosure relates to the field of wireless communications, in particular to a multi-link terminal, a method and device for performing link switching by a multi-link terminal, and a storage medium.

### Background

The 802.11be network, also called an Extremely High Throughput (EHT) network, achieves extremely high throughput through a series of system characteristics and enhanced functions of multiple mechanisms. As the use of Wireless Local Area Network (WLAN) continues to grow, providing wireless data services in many environments (such as homes, enterprises, and hot spots) becomes increasingly important. In particular, video traffic will continue to be the main type of traffic in many WLAN deployments. Because of the emergence of 4K and 8K videos (uncompressed rate of 20 Gbps), requirements for throughput of these applications are developing. New applications with high throughput and low latency, such as virtual reality or augmented reality, game, remote offices and cloud computing, will increase sharply (for example, a real-time game has a latency of less than 5ms).

Given the high throughput and strict real-time latency requirements of these applications, users expect higher throughput, greater reliability, less latency and jitter, and higher power efficiency when their applications are supported through the WLAN. The users expect improved integration with a Time Sensitive Network (TSN) to support the applications over heterogeneous Ethernet and WLAN. The 802.11be network is designed to ensure the competitiveness of WLAN by further increasing the total throughput and reducing the latency, while ensuring backward compatibility and coexistence with old technical standards. 802.11 compatible devices operate in frequency bands 2.4 GHz, 5 GHz and 6 GHz.

In the 802.11be network, in order to achieve the above purpose, it is proposed that multiple data transmission links can be established between a terminal and an access point, and the transmission rate is improved by the simultaneous transmission of the multiple links.

### Summary

In the process of multi-link communication, it is often necessary to optimize the overall network performance or the current link can not meet the requirements of a terminal due to a network load or the change of the quality of service required by the current service. In order to effectively guarantee the overall performance of network and improve the quality of user service, the embodiments of the present disclosure puts forward a multi-link terminal, a method and device for a multi-link terminal to perform link switching, and a storage medium.

In the first aspect, the embodiments of the present disclosure provides a method for performing link switching by a multi-link terminal, which may include that: a link switching request message is sent to a network access device on a primary link, the link switching request message containing original link information and target link information; a link switching response message sent by the network access device is received on the primary link, the link switching response message containing mapping information of Traffic Identifier (TID) and link updated by the network access device; if the link switching is supported in the link switching response message, the local mapping information of TID and link is updated according to the mapping information of TID and link in the link switching response message, the connection with the original link is disconnected, and a connection is established with the network access device on the target link.

Furthermore, that a connection is established with the network access device on the target link may include that: an association request message or a reassociation request message is sent to the network access device on the target link; and an association response message or a reassociation response message which contains an association identifier and is sent by the network access device is received on the target link. The association identifier is set by the network access device, and the setting method includes that: the association identifier is set to the original association identifier or the association identifier is set to the maximum available association identifier, and the association identifiers on other links are updated; and the local association identifier on the target link is set according to the association identifier in the association response message or the reassociation response message.

In a possible design, that a connection is established with the network access device on the target link may further include that: a notification message sent by the network access device is received on the primary link, the notification message containing the association identifier updated by the network access device; and the local association identifiers on links other than the target link are updated according to the association identifier in the notification message.

In another possible design, that a connection is established with the network access device on the target link may further include that: the target link sends the notification message to other links, the notification message containing the local association identifier set on the target link; and the other links update the local association identifiers on the other links according to the association identifier in the notification message.

Optionally, the method for link switching may further include that: a broadcast message or the association response message or the reassociation response message which contains available link information and is sent by the network access device is received on the primary link; and the target link is selected from available links according to the received available link information.

In the second aspect, the embodiments of the present disclosure provides another method for performing link switching by a multi-link terminal, which may include that: the link switching request message is sent to the network access device on the primary link, the link switching request message containing the original link information and the target link information; the link switching response message sent by the network access device is received on the primary link, and if the link switching is supported in the link switching response message, the connection with the original link is disconnected, and the association request message or the reassociation request message is sent to the network access device on the target link; the association response message or the reassociation response message sent by the network access device is received on the target link, the association response message or the reassociation response message containing the mapping information of TID and link updated by the network access device; and the local mapping information of TID and link is updated according to the mapping information of TID and link in the association response message or the reassociation response message.

Furthermore, the association response message or the reassociation response message also contains the association identifier. The association identifier is set by the network access device, and the setting method includes that: the association identifier is set to the original association identifier or the association identifier is set to the maximum available association identifier, and the association identifiers on other links are updated. The method for link switching may further include that: the local association identifier on the target link is set according to the association identifier in the association response message or the reassociation response message.

In a possible design, the method for link switching may further include that: the notification message sent by the network access device is received on the primary link, the notification message containing the association identifier updated by the network access device; and the local association identifiers on links other than the target link are updated according to the association identifier in the notification message.

In another possible design, the method for link switching may further include that: the target link sends the notification message to other links, the notification message containing the local association identifier set on the target link; and the other links update the local association identifiers on the other links according to the association identifier in the notification message.

Optionally, the method for link switching may further include that: the broadcast message or the association response message or the reassociation response message which contains the available link information and is sent by the network access device is received on the primary link; and the target link is selected from the available links according to the received available link information.

In the third aspect, the embodiments of the present disclosure provides a device for performing link switching by a multi-link terminal, which may include: a link switching request sending module and a link switching module.

The link switching request sending module is configured to send the link switching request message to the network access device on the primary link, the link switching request message containing the original link information and the target link information.

The link switching module is configured to receive the link switching response message sent by the network access device on the primary link, the link switching response message containing the mapping information of TID and link updated by the network access device, and if the link switching is supported in the link switching response message, update the local mapping information of TID and link according to the mapping information of TID and link in the link switching response message, disconnect the connection with the original link, and establish a connection with the network access device on the target link.

In the fourth aspect, the embodiments of the present disclosure provides another device for performing link switching by a multi-link terminal, which may include: a link switching request sending module, a link switching response message receiving module, an association request message sending module, an association response message receiving module and a link switching module.

The link switching request sending module is configured to send the link switching request message to the network access device on the primary link, the link switching request message containing the original link information and the target link information.

The link switching response message receiving module is configured to receive on the primary link the link switching response message sent by the network access device.

The association request message sending module is configured to disconnect the connection with the original link if the link switching is supported in the link switching response message, and send the association request message or the reassociation request message to the network access device on the target link.

The association response message receiving module is configured to receive on the target link the association response message or the reassociation response message sent by the network access device, the association response message or the reassociation response message containing the mapping information of TID and link updated by the network access device.

The link switching module is configured to update the local mapping information of TID and link according to the mapping information of TID and link in the association response message or the reassociation response message.

In the fifth aspect, the embodiments of the present disclosure provide a multi-link terminal, which may include: a memory for storing a program; and a processor, coupled to the memory. When executed by the processor, the program enables the multi-link terminal to perform the method for performing link switching by a multi-link terminal as described in any of the first aspect and the second aspect or a possible implementation mode of any aspect.

In the sixth aspect, the embodiments of the present disclosure provides a computer-readable storage medium, which may include: a computer instruction. When running on the terminal, the computer instruction enables the terminal to perform the method for performing link switching by a multi-link terminal as described in any of the first aspect and the second aspect or a possible implementation mode of any aspect.

It is to be noted that the device for performing link switching by a multi-link terminal described in the third aspect and the fourth aspect, the multi-link terminal described in the fifth aspect and the computer-readable storage medium described in the sixth aspect are used for performing the method provided in the first aspect and the second aspect, and thus can achieve the same beneficial effects as the method described in the first aspect and the second aspect. The embodiments of the present disclosure will not describe these beneficial effects in detail here.

In the present application, the terminal requests actively link switching, which realizes the switching between the original link and the target link, effectively guarantees the overall performance of network, improves the quality of user service, and guarantees the continuity of data transmission to avoid data loss.

### Brief Description of the Drawings

The embodiments of the present disclosure will be illustrated by embodiments and by reference to the accompanying drawings.
Fig. 1 is a flowchart of a method for performing link switching by a multi-link terminal according to the embodiments of the present disclosure.
Fig. 2 is a flowchart of another method for performing link switching by a multi-link terminal according to the embodiments of the present disclosure.

### Detailed Description of the Embodiments

In order to make those skilled in the art understand the technical solutions in the embodiments of the present disclosure better, the technical solutions in the embodiments of the present disclosure are clearly and completely elaborated below in combination with the accompanying drawings. It is apparent that the described embodiments are only a part of the embodiments of the present disclosure but not all. It should be understood that the specific embodiments described here are only used for explaining the embodiments of the present disclosure, but not for limiting the embodiments of the present disclosure. On the basis of the embodiment of the embodiments of the present disclosure, all other embodiments obtained on the premise of no creative work of those skilled in the art should fall within the protection scope of the embodiments of the present disclosure. In addition, although the disclosure in the embodiments of the present disclosure is introduced according to one or several demonstrative examples, it should be understood that each aspect of the disclosure can also individually constitute a complete technical solution. The following embodiments and characteristics in the embodiments may be combined without conflicts.

In the embodiments of the present disclosure, the words like "exemplarily" and "for example" are used to serve as example, example illustration or explanation. Any embodiments or designs described as "example" in the embodiments of the present disclosure shall not be construed as being preferred or superior to other embodiments or designs. More exactly, the purpose of using the word "example" is to present the concept in a specific way.

Unless otherwise specified, the technical or scientific terms used in the embodiments of the present disclosure shall have the ordinary meanings understood by those of ordinary skill in the art to which the embodiments of the present disclosure belongs. The "first," "second," and similar terms used in the embodiments of the present disclosure do not indicate any order, number, or importance, but are used only for discriminative description. "Comprise" or "include" and similar terms mean that elements or objects appearing before the term include the elements or objects appearing after the term and their equivalents, and other components or objects are not excluded. The term "and/or" includes any or all combinations of one or more associated items that are listed.
device for performing link switching by a multi-link terminal

The technical solutions of the embodiments of the present disclosure are described below in combination with the accompanying drawings.

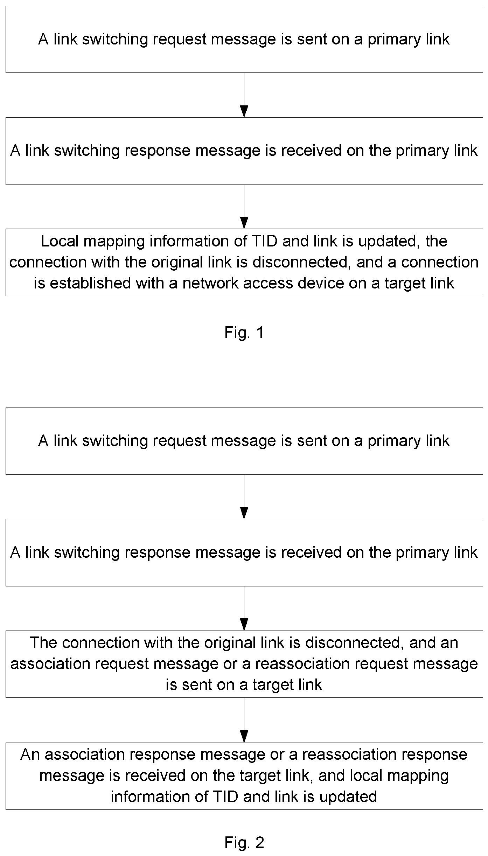

Fig. 1 is a flowchart of a method for performing link switching by a multi-link terminal according to the embodiments of the present disclosure. As shown in Fig. 1, the method for performing link switching by a multi-link terminal includes the following steps.

At Step 11, a terminal sends a link switching request message on a primary link, the link switching request message containing original link information and target link information.

At Step 12, after receiving the link switching request message, the network access device modifies locally the mapping information of TID and link if data transmission on a target link is supported, and contains new association information in a link switching response message to be sent to the terminal. Exemplarily, the local association information of original TID and link of the network access device is shown in Table 1, the network access device can directly associate the TID associated with the original link with the target link to form the new association information, or modify the mapping information of TID and link according to network congestion and/or network load, as well as the transmission rate and bandwidth of the link itself. The modified mapping information of TID and link is shown in Table 2 or Table 3, in which link1 is the primary link, link2 is the secondary link, and link2 is the original link needing be switched, and the target link is link3. In some other embodiments, link1 can also be the original link needing to be switched.

**Table 1**

| TID | Link |
|---|---|
| 0-7 | link1 |
| 8-15 | link2 |

**Table 2**

| TID | Link |
|---|---|
| 0-7 | link1 |
| 8-15 | link3 |

**Table 3**

| TID | Link |
|---|---|
| 0,1,6,7 | link1 |
| 2-5,8-15 | link3 |

At Step 13, after receiving the link switching response message on the primary link, the terminal updates the local mapping information of TID and link if the link switching is supported in the link switching response message, disconnects from the original link, and establishes a connection with the network access device on the target link.

In some embodiments, that the terminal establishes the connection with the network access device on the target link includes a process of implementing association or reassociation on the target link, which specifically includes the following steps.

At Step 131, the terminal sends the association request message or the reassociation request message to the network access device on the target link.

At Step 132, after receiving the association request message or the reassociation request message, the network access device assigning an Association Identifier (AID) to the terminal based on the use of the AID on the target link, and contains the allocated AID in the association response message or the reassociation response message to be sent to the terminal. The assigning method includes that: if the original AID of the terminal is not used on the target link, the assigned AID is the original AID; otherwise, the assigned AID is the maximum available AID, and the AIDs on other links are updated. In some other embodiments, when the original AID of the terminal is not used on the target link, the AID may also be assigned to the maximum available AID. For example, the original AID assigned to the terminal by the network access device on the primary link link1 and the original link link2 is 4; if the AID equal to 4 on the target link link3 is not used, then the AID of the terminal remains unchanged; and if the AID equal to 4 on link3 has been assigned to other terminals, and the maximum available AID on link3 is assumed to be 8, and then the AID assigned to the terminal is 8.

At Step 133, after receiving the association response message or the reassociation response message on the target link, the terminal sets the local AID on the target link according to the AID in the association response message or the reassociation response message.

In some embodiments, after updating locally the AIDs on other links, the network access device also sends a notification message containing the updated AID to the terminal on the primary link. After receiving the notification message on the primary link, the terminal updates the local AIDs on links other than the target link. In some other embodiments, the notification message may also be sent to the links other than the target link through the target link. The notification message contains the AID set locally on the target link. After the other links receive the notification message, the local AIDs on the other links are updated.

In some embodiments, the network access device also contains the available link information in the broadcast message or the association response message or the reassociation response message to be sent to the terminal, so as to enable the terminal to select the target link from the available links when requesting the link switching.

Fig. 2 is a flowchart of another method for performing link switching by a multi-link terminal according to the embodiments of the present disclosure. As shown in Fig. 2, the method for performing link switching by a multi-link terminal includes the following steps.

At Step 21, the terminal sends the link switching request message on the primary link, the link switching request message containing the original link information and the target link information.

At Step 22, after the network access device receives the link switching request message, it sends the link switching response message to the terminal if data transmission is supported on the target link.

At Step 23, after receiving the link switching response message on the primary link, the terminal disconnects from the original link if the link switching is supported in the link switching response message, and sends the association request message or the reassociation request message on the target link.

At Step 24, after receiving the association request message or the reassociation request message, the network access device modifies locally the mapping information of TID and link, and sends the modified mapping information of TID and link to the terminal in the association response message or the reassociation response message. The method for the network access device to modify the mapping information of TID and link can refer to the method as an example in Step 12 and will not be repeated here.

At Step 25, after receiving the association response message or the reassociation response message sent by the network access device on the target link, the terminal updates the local mapping information of TID and link.

In some embodiments, the association response message or the reassociation response message sent by the network access device also contains the AID assigned to the terminal. The specific assigning method can refer to the method as an example in Step 132 and will not be repeated here. After receiving the association response message or the reassociation response message on the target link, the terminal also sets the local AID on the target link according to the AID in the association response message or the reassociation response message.

The embodiments of the present disclosure also provide a device for performing link switching by a multi-link terminal, which is used for implementing the method for performing link switching by a multi-link terminal involved in any of the embodiments in Fig. 1 and Fig. 2 through hardware or the corresponding software executed by hardware. The hardware or software includes one or more units corresponding to the above functions, such as a link switching request message sending module and a link switching module.

The embodiments of the present disclosure also provide a multi-link terminal, which includes: a memory for storing a program; and a processor coupled to the memory. The processor is configured to run the program, so that the multi-link terminal performs the method involved in any of the embodiments in Fig. 1 and Fig. 2.

The embodiments of the present disclosure also provide a computer-readable storage medium, which includes a computer instruction. When running on the terminal, the computer instruction enables the terminal to perform the method involved in any of the embodiments in Fig. 1 and Fig. 2.

It should be understood that, in various embodiments of the embodiments of the present disclosure, a magnitude of a sequence number of each process does not mean an execution sequence, part or all of the steps can be executed in parallel or in sequence, and the execution sequence of each process should be determined by its function and an internal logic and should not form any limit to an implementation process of the embodiments of the present disclosure.

Those of ordinary skill in the art may realize that the units and algorithm steps of each example described in combination with the embodiments disclosed in the embodiments of the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the embodiments of the present disclosure.

Those skilled in the art may clearly learn about that specific working process of the system, device and unit described above may refer to the corresponding processes in the method embodiment and will not be elaborated herein for convenient and brief description

In some embodiments provided by the embodiments of the present disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the embodiments of the present disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the application substantially or parts making contributions to the conventional art or part of the technical solutions may be embodied in form of software product, and the computer software product is stored in a storage medium, including multiple instructions configured to enable a computer device (which may be a personal computer, a server, a network device or a terminal device, etc.) to execute all or part of the steps of the method in each embodiment of the application. The storage media include: various media capable of storing program codes such as a USB flash disk, a mobile hard disk, a ROM, a RAM, a magnetic disk or a compact disc.

The terms used in the embodiments of the present disclosure are for the purpose of describing particular embodiments only and are not intended to limit the embodiments of the present disclosure. The singular forms "a", "an" and "the" used in the embodiments of the present disclosure and the appended claims of the embodiments of the present disclosure are also intended to include the plural forms unless the context clearly indicates otherwise. It is also to be understood that the term "and/or" as used herein refers to and includes any or all possible combinations of one or more of the associated listed items. The character "/" in the embodiments of the present disclosure usually represents that previous and next associated objects form an "or" relationship.

The term "if" or "in case" used here may be explained as "while" or "when" or "responsive to determining" or "responsive to detecting", which depends on the context. Similarly, based on the context, phrase "if determining" or "if detecting (stated condition or event)" may be explained as "when determining" or "responsive to determining" or "when detecting (stated condition or event)" or "responsive to detecting (stated condition or event)".

Those of ordinary skill in the art may understand that all or part of the steps in the method of the above embodiment may be completed through related hardware instructed by a program, the program may be stored in a readable storage medium of a device, and when the program is executed, all or part of the steps are included. The stored media are, for example, FLASH, EEPROM, etc.

The above is only the specific implementation manner of the embodiments of the present disclosure and not intended to limit the scope of protection of the embodiments of the present disclosure. Any variations or replacements apparent to those skilled in the art within the technical scope disclosed by the embodiments of the present disclosure shall fall within the scope of protection of the embodiments of the present disclosure. Therefore, the scope of protection of the embodiments of the present disclosure shall be subject to the scope of protection of the claims.

## Claims

1. A method for performing link switching by a multi-link terminal, comprising:
sending a link switching request message to a network access device on a primary link, the link switching request message containing original link information and target link information;
receiving a link switching response message sent by the network access device on the primary link, the link switching response message containing association information of Traffic Identifier (TID) and link updated by the network access device, in a case that the link switching is supported in the link switching response message, updating the local association information of TID and link according to the association information of TID and link in the link switching response message, disconnecting the connection with an original link, and establishing a connection with the network access device on the target link.

2. The method for performing link switching by the multi-link terminal claimed in claim 1, wherein establishing the connection with the network access device on the target link comprises:
sending an association request message or a reassociation request message to the network access device on the target link;
receiving on the target link an association response message or a reassociation response message which contains an association identifier and is sent by the network access device, the association identifier is set by the network access device, and the setting method comprises: setting the association identifier to the original association identifier or setting the association identifier to the maximum available association identifier, and updating the association identifiers on other links; and
setting the local association identifier on the target link according to the association identifier in the association response message or the reassociation response message.

3. The method for performing link switching by the multi-link terminal claimed in claim 2, wherein establishing a connection with the network access device on the target link further comprises:
receiving on the primary link a notification message sent by the network access device, the notification message containing the association identifier updated by the network access device; and
updating the local association identifiers on links other than the target link according to the association identifier in the notification message.

4. The method for performing link switching by the multi-link terminal claimed in claim 2, wherein establishing a connection with the network access device on the target link further comprises:
sending, by the target link, the notification message to other links, the notification message containing the local association identifier set on the target link; and
updating, by the other links, the local association identifiers on the other links according to the association identifier in the notification message.

5. The method for performing link switching by the multi-link terminal according to any one of claims 1 to 4, further comprising:
receiving on the primary link a broadcast message or the association response message or the reassociation response message which contains available link information and is sent by the network access device; and
selecting the target link from available links according to the received available link information.

6. A method for performing link switching by the multi-link terminal, comprising:
sending a link switching request message to a network access device on a primary link, the link switching request message containing original link information and target link information;
receiving on the primary link a link switching response message sent by the network access device, if the link switching is supported in the link switching response message, disconnecting the connection with the original link, and sending an association request message or a reassociation request message to the network access device on the target link;
receiving on the target link an association response message or a reassociation response message sent by the network access device, the association response message or the reassociation response message containing mapping information of Traffic Identifier (TID) and link updated by the network access device; and
updating the local mapping information of TID and link according to the mapping information of TID and link in the association response message or the reassociation response message.

7. The method for performing link switching by the multi-link terminal claimed in claim 6, wherein the association response message or the reassociation response message also contains an association identifier; the association identifier is set by the network access device, and the setting method comprises: setting the association identifier to the original association identifier or setting the association identifier to the maximum available association identifier, and updating the association identifiers on other links; and
the method for link switching further comprises: setting the local association identifier on the target link according to the association identifier in the association response message or the reassociation response message.

8. The method for performing link switching by the multi-link terminal claimed in claim 7, further comprising:
receiving on the primary link a notification message sent by the network access device, the notification message containing the association identifier updated by the network access device; and
updating the local association identifiers on links other than the target link according to the association identifier in the notification message.

9. The method for performing link switching by the multi-link terminal claimed in claim 7, further comprising:
sending, by the target link, the notification message to other links, the notification message containing the local association identifier set on the target link; and
updating, by the other links, the local association identifiers on the other links according to the association identifier in the notification message.

10. The method for performing link switching by the multi-link terminal according to any one of claims 6 to 9, further comprising:
receiving on the primary link a broadcast message or the association response message or the reassociation response message which contains available link information and is sent by the network access device; and
selecting the target link from available links according to the received available link information.

11. A device for performing link switching by the multi-link terminal, comprising:
a link switching request sending module, configured to send a link switching request message to a network access device on a primary link, the link switching request message containing original link information and target link information;
a link switching module, configured to receive a link switching response message sent by the network access device on the primary link, the link switching response message contains mapping information of Traffic Identifier (TID) and link updated by the network access device, in a case that the link switching is supported in the link switching response message, update the local mapping information of TID and link according to the mapping information of TID and link in the link switching response message, disconnect the connection with the original link, and establish a connection with the network access device on the target link.

12. A device for a multi-link terminal to perform link switching, comprising:
a link switching request sending module, configured to send a link switching request message to a network access device on a primary link, the link switching request message containing original link information and target link information;
a link switching response message receiving module, configured to receive on the primary link a link switching response message sent by the network access device;
an association request message sending module, configured to disconnect the connection with the original link if the link switching is supported in the link switching response message, and send an association request message or a reassociation request message to the network access device on the target link;
an association response message receiving module, configured to receive on the target link an association response message or a reassociation response message sent by the network access device, the association response message or the reassociation response message containing association information of Traffic Identifier (TID) and link updated by the network access device; and
a link switching module, configured to update the local association information of TID and link according to the association information of TID and link in the association response message or the reassociation response message.

13. A multi-link terminal, comprising:
a memory for storing a program;
a processor, coupled to the memory, wherein when executed by the processor, the program enables the multi-link terminal to perform the method for performing link switching by the multi-link terminal as claimed in any one of claims 1 to 10.

14. A computer-readable storage medium, comprising a computer instruction, wherein when running on a terminal, the computer instruction enables the terminal to perform the method for performing link switching by the multi-link terminal according to any one of claims 1 to 10.
